Europäisches Patentamt

European Patent Office

Office européen des brevets

(19)

(11) **EP 0 392 172 B1**

(12) **EUROPÄISCHE PATENTSCHRIFT**

(45) Veröffentlichungstag und Bekanntmachung des Hinweises auf die Patenterteilung:
**06.08.1997 Patentblatt 1997/32**

(51) Int Cl.⁶: **G01S 7/48**, G01S 17/58, G01S 17/06

(21) Anmeldenummer: **90103402.5**

(22) Anmeldetag: **22.02.1990**

(54) **Laser-Radar-System**

Laser-radar system

Système laser-radar

(84) Benannte Vertragsstaaten:
**CH DE FR GB IT LI NL SE**

(30) Priorität: **04.03.1989 DE 3907042**

(43) Veröffentlichungstag der Anmeldung:
**17.10.1990 Patentblatt 1990/42**

(73) Patentinhaber:
• **Firma Carl Zeiss**
**D-73446 Oberkochen (DE)**
Benannte Vertragsstaaten:
**CH DE FR IT LI NL SE**
• **CARL ZEISS-STIFTUNG HANDELND ALS CARL ZEISS**
**D-89518 Heidenheim (Brenz) (DE)**
Benannte Vertragsstaaten:
**GB**

(72) Erfinder: **Hinz, Alexander, Dr.**
**D-7923 Königsbronn (DE)**

(56) Entgegenhaltungen:
US-A- 3 732 013      US-A- 4 405 230
US-A- 4 572 662

• OPTICS LETTERS, Band 14, Nr. 3, 1. Februar 1989, Seiten 165-167, Optical Society of America, New York, US; P.J. DE GROOT et al.: "Backscatter-modulation velocimetry with an external-cavity laser diode"
• OPTICAL FIBER SENSORS TOPICAL MEETING, New Orleans, 27. - 29. Januar 1988, Seiten 129-132; E.M. STRZELECKI et al.: "Distance sensing using constant-amplitude wavelength-swept semiconductor lasers"
• PATENT ABSTRACTS OF JAPAN, Band 7, Nr. 819 (E-175), 14. Mai 1983; & JP-A-58 031 625 (TOMIJAMA TAKUMI)
• N.T.I.S. TECH. NOTES, Oktober 1988, Seite 869, Springfield, VA, US; "Depolarization-measuring device"
• OPTICAL FIBER SENSORS, 1988 TECHNICAL DIGEST SERIES, Band 2, Teil 2, 27.-29. Januar 1988, Seiten 305-308, New Orleans, LA, US; N. HARUNA et al.: "Active integrated optics for sensors"

**Beschreibung**

Die Erfindung betrifft eine Laser-Radar-Vorrichtung nach dem Oberbegriff des Anspruches 1 bzw. des Anspruches 2.

Laser-Radar-Verfahren und Vorrichtungen zur Geschwindigkeitsmessung bewegter Objekte mittels eines Laser-Sendestrahles gehen davon aus, daß die Frequenz des vom Objekt zurückgestreuten Laserlichtes eine Doppler-Verschiebung erfährt, aus deren Größe sich die Geschwindigkeit des angestrahlten Objektes bestimmen läßt.

Es ist bekannt, Laser-Radar-Systeme zur Geschwindigkeitsbestimmung bewegter Objekte entweder heterodyn oder homodyn zu betreiben.

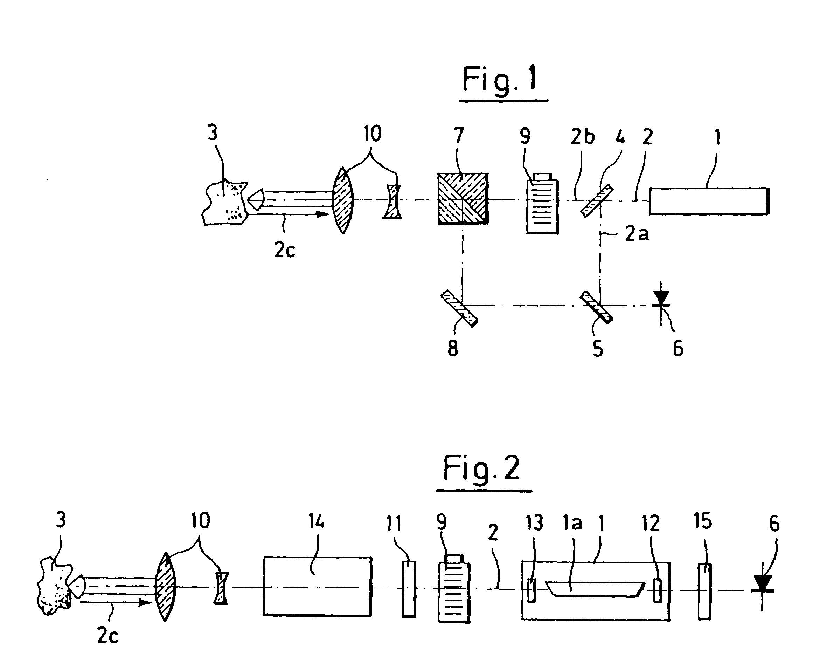

Heterodyne und homodyne Laser-Radar-Systeme sind beispielsweise in einer Zusammenfassung von Robert J. Keyes in der Zeitschrift Review of Scientific Instruments 57 (4), April 1986 auf den Seiten 519 bis 528 beschrieben. Eine homodyne Vorrichtung und eine homodyne Vorrichtung mit Frequenzversatz zur Geschwindigkeitsmessung sind in der Figur 1 und der dazugehörigen Beschreibung des genannten Berichtes näher erläutert.

Eine gattungsgemäße Vorrichtung ist aus US-A 3,732,013 bekannt. Der vorliegenden Erfindung liegt die Aufgabe zugrunde, eine Laser-Radar-Vorrichtung anzugeben, die geeignet ist zur Detektion von bewegten und unbewegten Objekten und zur Entfernungsmessung, die einen geringeren Geräteaufwand und weniger Justierarbeit als die bekannten Vorrichtungen erfordert.

Diese Aufgabe wird durch Laser-Radar-Vorrichtungen mit den Merkmalen der Ansprüche 1 oder 2 gelöst. Vorteilhafte Ausgestaltungen der Vorrichtungen sind in den Patentansprüchen 3 bis 10 beschrieben.

Bei dieser Rückkopplung des vom Objekt reflektierten Laserlichtes über das Teleskop in den Laser-Resonator ist im Falle eines bewegten Objektes ein Mischsignal auf den Überlagerungsempfänger beobachtbar, dessen Frequenz $\Delta f$ gemäß

$$\Delta f = 2\, f_o \cdot \frac{v}{c}$$

$f_o$ - Laserfrequenz
$v$ - Objektgeschwindigkeit
$c$ - Lichtgeschwindigkeit

gegeben ist. Durch die Wechselwirkung des rückgestreuten Signals mit laseraktivem Medium und Resonator kommt es zu einem Verstärkungseffekt, der gegenüber dem üblichen Aufbau nach dem Stand der Technik eine verbesserte Empfindlichkeit ermöglicht.

Die Empfangsbandbreite des Signals ist gegeben durch die Verstärkungsbandbreite des aktiven Mediums - bei einem Gaslaser im wesentlichen durch den Druck bestimmt - und die Bandbreite des optischen Resonators, die durch die Finesse $f$ charakterisiert wird.

$$\mathcal{F} = \pi \cdot \frac{\sqrt[4]{R_o\, R_g}}{1 - \sqrt{R_o\, R_g}}$$

$R_o$, $R_g$ sind effektive Reflektivitäten, in denen Intracavity Verluste des Laserresonators enthalten sind.

Die Bandbreite des optischen Resonators kann bei Berücksichtigung höherer transversaler als auch longitudinaler Moden höher sein als durch das einfache Modell der Finesse berechnet wird. Dies kann für Homodynempfang mit Frequenzversatz ausgenutzt werden.

Ein Ausführungsbeispiel der Erfindung ist in der Zeichnung dargestellt und wird im folgenden näher erläutert. Es zeigen

Figur 1      die schematische Darstellung eines Laser-Radar-Systems zur Geschwindigkeitsmessung bewegter Objekte nach dem Stand der Technik;

Figur 2      die schematische Darstellung eines erfindungsgemäßen Laser-Radar-Systems zur Durchführung der erfindungsgemäßen Verfahren;

Figur 3    eine perspektivische Darstellung des erfindungsgemäßen Laser-Radar-Systems.

In der Darstellung der Figur 1 ist mit dem Bezugszeichen (1) ein Laser bezeichnet. Dieser sendet einen Laserstrahl (2) in Richtung des Objektes (3) aus. Von einem Strahlteilelement (4) wird ein kleiner Teil (2a) des Laserlichtes abgezweigt und gelangt als Lokaloszillatorstrahl über einen weiteren Strahlteiler (5) auf einen als Überlagerungsempfänger ausgeführten Detektor (6). Mit dem Restteil (2b) des Lasersendelichtes wird das Objekt (3) beleuchtet. Das vom Objekt zurückgestreute Laserlicht (2c) wird über eine Strahlweiche (7), einen Umlenkspiegel (8) und das teildurchlässige Element (5) auf den Überlagerungsempfänger (6) gelenkt und überlagert sich mit dem Lokaloszillatorstrahl (2a) und erzeugt das Überlagerungssignal, dessen Frequenz proportional der Geschwindigkeit des Objektes (3) ist. Mit (9) ist ein Frequenzshifter bezeichnet, der beispielsweise als Bragg-Zelle ausgebildet sein kann, und mit (10) ein Teleskop.

In der schematischen Darstellung der Figur 2 ist mit (1) wieder ein Laser bezeichnet, mit (6) ein Überlagerungsempfänger, mit (9) ein Frequenzshifter, mit (11) ein $\lambda$/4-Phasenschieber, mit (10) ein Teleskop und mit (3) das Objekt. Das vom Objekt (3) zurückgestrahlte Laserlicht gelangt in der erfindungsgemäßen Vorrichtung nicht außerhalb des Laser-Resonators auf den Detektor, sondern es wird in den Laser-Resonator (1) zurückgekoppelt bevor es auf den Detektor (6) gelangt. Durch die Wechselwirkung des rückgestreuten Signals mit dem laseraktiven Medium (1a) und dem Resonator kommt es zu einem Verstärkungseffekt, der gegenüber dem in Figur 1 dargestellten Aufbau ein besseres Signal/Rauschverhältnis ermöglicht. Entsprechend den in den Unteransprüchen 4-16 beschriebenen vorteilhaften Ausführungsformen der Erfindung kann vor dem Überlagerungsempfänger (6) ein Polarisator (15) angeordnet sein, die Auskoppelelemente (12) und (13) können auf der Senderseite als Auskoppelspiegel und auf der Überlagerungsempfängerseite als polarisationsselektives Element ausgebildet sein. Der im Sendestrahl (2) angeordnete Frequenzshifter kann vorteilhafterweise als Bragg-Zelle ausgebildet sein. Zwischen dem Frequenzshifter (9) und dem Teleskop (10) können ein $\lambda$/4-Phasenschieber (11) und ein Scanner (14) vorgesehen sein.

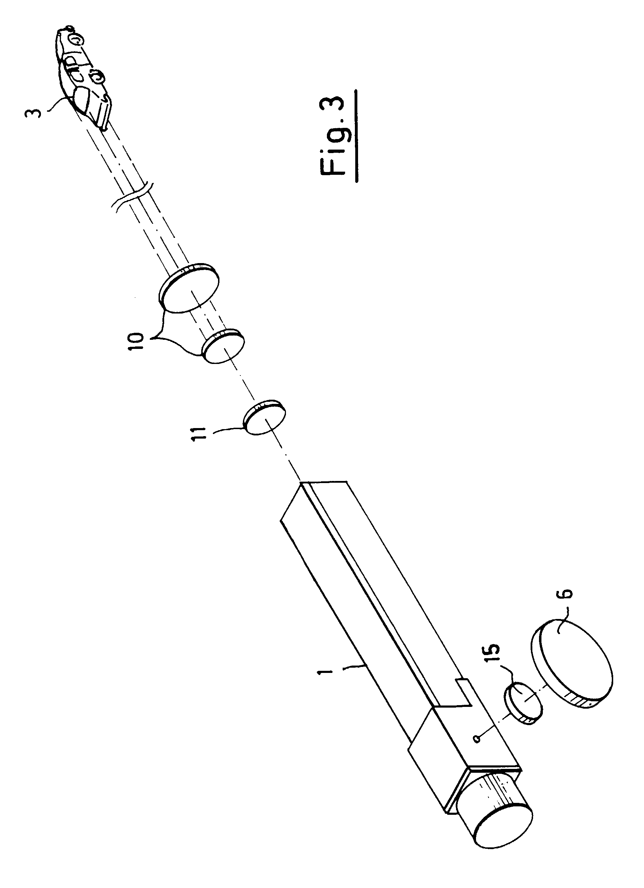

In der in Figur 3 dargestellten perspektivischen Ansicht einer erfindungsgemäßen Vorrichtung sind für die einzelnen Bauelemente die gleichen Bezeichnungen gewählt wie in der Darstellung der Figur 2.

**Patentansprüche**

1.  Laser-Radar-Vorrichtung zur Detektion unbewegter oder bewegter Objekte und zur Geschwindigkeitsmessung, die einen optischen Überlagerungsempfänger (6), einen aus einem laseraktiven Medium (1a) und einem Resonator mit mindestens zwei Auskoppelelementen (12, 13) bestehenden Laser (1) und ein Teleskop (10) aufweist, wobei das Objekt (3) voneinem Laser-Sendestrahl (2) beleuchtet und das vom Objekt reflektierte Laserlicht (2c) mit dem optischen Überlagerungempfänger (6) detektiert wird, wobei das reflektierte Licht (2c) durch den Laser-Resonator (1a, 12, 13), durch einen außerhalb des Resonators vor dem Überlagerungsempfänger (6) vorgesehenen Polarisator (15) und auf den Überlagerungsempfänger (6) gelenkt wird, dadurch gekennzeichnet, daß im Laser-Resonator ein optisches Element (12) vorgesehen ist, das die Polarisationsrichtung des Laserlichtes definiert, und daß im Verlauf des Laser-Sendestrahls (2) ein $\lambda$/4-Phasenschieber (11) positioniert ist.

2.  Laser-Radar-Vorrichtung, die einen optischen Überlagerungsempfänger (6), einen aus einem laseraktiven Medium (1a) und einem Resonator mit mindestens zwei Auskoppelelementen (12, 13) bestehenden Laser (1) und ein Teleskop (10) aufweist, wobei das Objekt (3) von einem Laser-Sendestrahl (2) beleuchtet und das vom Objekt reflektierte Laserlicht (2c) mit dem optischen Überlagerungsempfänger (6) detektiert wird, wobei das reflektierte Licht (2c) durch den Laser-Resonator (1a, 12, 13), durch einen vor dem Überlagerungsempfänger vorgesehenen Polarisator (15) und auf den Überlagerungsempfänger (6) gelenkt wird, dadurch gekennzeichnet, daß die Vorrichtung zur Entfernungsmessung unbewegter oder bewegter Objekte und zur Geschwindigkeitsmessung ausgeführt ist, daß im Laser-Resonator ein optisches Element (12) vorgesehen ist, das die Polarisationsrichtung des Laserlichtes definiert, daß im Verlauf des Laser-Sendestrahls (2) ein $\lambda$/4-Phasenschieber (11) positioniert ist und daß dem Laser-Sendestrahl (2) eine Frequenzmodulation aufgeprägt wird.

3.  Laser-Radar-Vorrichtung nach Anspruch 1 oder 2, dadurch gekennzeichnet, daß zur Bestimmung der räumlichen Koordinaten des Objektes (3) der Laser-Sendestrahl (2) und das vom Objekt reflektierte Laserlicht (2c) kollinear über eine Scan-Vorrichtung (14) geführt werden.

4.  Vorrichtung nach Anspruch 1, 2 oder 3, dadurch gekennzeichnet, daß ein polarisationsselektives Auskoppelelement (12) vorgesehen ist, das für verschiedene Polarisationsrichtungen der Laserstrahlung unterschiedliche Reflektivität und Transmission aufweist.

**EP 0 392 172 B1**

5. Vorrichtung nach Anspruch 4, dadurch gekennzeichnet, daß eines der Auskoppelelemente (12, 13) ein Reflexionsgitter in Littrow-Anordnung ist.

6. Vorrichtung nach Anspruch 5, dadurch gekennzeichnet, daß der Überlagerungsempfänger (6) hinter dem polarisationsselektiven Auskoppelelement (12) angeordnet ist.

7. Vorrichtung nach Anspruch 1 oder 2, dadurch gekennzeichnet, daß die Transmission des Laser-Resonators auf der Seite des Überlagerungsempfängers (6) so gewählt ist, daß dieseran der Quantenrauschgrenze und unterhalb der Sättigung betrieben werden kann.

8. Vorrichtung nach Anspruch 2, dadurch gekennzeichnet, daß im Verlauf des Lasersendestrahls (2) eine Braggzelle (9) vorgesehen ist, die dem vom Objekt in den Laser zurückreflektierten Licht (2c) einen Frequenzoffset aufprägt.

9. Vorrichtung nach Anspruch 8, dadurch gekennzeichnet, daß die doppelte Modulationsfrequenz der Braggzelle (9) so gewählt ist, daß sie der Eigenfrequenz eines höheren transversalen oder longitudinalen Mode des optischen Resonators entspricht.

10. Vorrichtung nach Anspruch 1 oder 2, dadurch gekennzeichnet, daß als Laserlichtquelle ein $CO_2$-Laser vorgesehen ist.

**Claims**

1. Laser radar system for detecting stationary or moving objects and for measuring velocity, comprising:

   - an optical heterodyne receiver (6),
   - a laser (1) composed of a laser active medium (1a) and
   - a resonator with at least two out coupling elements (12, 13), and a telescope (10), where
   - the object (3) is illuminated by a laser emitted beam (2) and the laser light (2c) reflected by the object (3) is detected by the optical heterodyne receiver (6), where
   - laser light (2c) reflected by the object (3) is guided through the laser resonator (1a, 12, 13), through a polarizer (15), which is arranged outside of the resonator in front of the heterodyne receiver (6), and
   - onto the heterodyne receiver (6), characterized in that
   - an optical element (12) is provided within the laser resonator, which defines the direction of polarization of the laser light, and that
   - a $\lambda/4$ phase shifter (11) is arranged in the path of the laser emitted beam (2).

2. Laser radar system comprising:

   - an optical heterodyne receiver (6),
   - a laser (1) composed of a laser active medium (la) and a resonator with at least two out-coupling elements (12, 13), and
   - a telescope (10), where
   - the object (3) is illuminated by a laser emitted beam (2) and the laser light (2c) reflected by the object (3) is guided through the laser resonator (1a, 12, 13), through a polarizer (15), which is arranged outside of the resonator in front of the heterodyne receiver, and
   - onto the heterodyne receiver (6), characterized in that
   - the system is adapted for measuring the distance of stationary or moving objects and for measuring velocity, that
   - an optical element (12) is provided within the laser resonator, which defines the direction of polarization of the laser light, that
   - a $\lambda/4$ phase shifter (11) is arranged in the path of the laser emitted beam (2), and that a frequency modulation is impressed to the laser emitted beam.

3. Laser radar system according to claim 1 or 2,
   characterized in that the laser emitted beam (2) and the laser light (2c) reflected by the object are collinearly guided via a scanning system (14) for measuring the spatial coordinates of the object (3).

4. System according to claim 1, 2 or 3, characterized in that a polarization sensitive out-coupling element (12) is provided, which has different reflectance and transmittance for different directions of polarization of the laser light.

5. System according to claim 4, characterized in that one of the out-coupling elements (12, 13) is a reflective grating in a Littrow arrangement.

6. System according to claim 5, characterized in that the heterodyne receiver is arranged behind the polarization selective out-coupling element (12).

7. System according to claim 1 or 2, characterized in that on the side of the heterodyne receiver the transmission of the laser resonator is selected such that it can be operated at the limit of quantum noise and below saturation.

8. System according to claim 2, characterized in that a Bragg cell (9) is provided in the course of the laser emitted beam (2), which impresses a frequency offset onto the light (2c) reflected back into the laser by the object.

9. System according to claim 8, characterized in that the twofold of the modulation frequency of the Bragg cell (9) is selected such that it equals the natural frequency of a higher transversal or longitudinal mode of the optical resonator.

10. System according to claim 1 or 2, characterized in that a $CO_2$-laser is provided as the laser.

**Revendications**

1. Dispositif de radar à laser pour détecter des objets immobiles ou en mouvement et pour en mesurer la vitesse, qui présente un récepteur superhétérodyne optique (6), un laser (1) formé d'un milieu actif (la) et d'un résonateur à deux éléments de sortie (12, 13) au moins et un télescope (10), tel que l'objet (3) est éclairé par un faisceau d'émission laser (2) et que la lumière laser (2c) réfléchie par l'objet est détectée par le récepteur superhétérodyne optique (6), tel que la lumière réfléchie (2c) est déviée sur le récepteur superhétérodyne (6), en passant à travers le résonateur laser (la, 12, 13) et un polariseur (15) interposé à l'extérieur du résonateur en amont du récepteur superhétérodyne (6), caractérisé en ce qu'un élément optique (12) est prévu dans le résonateur laser pour définir la direction de la polarisation de la lumière laser et qu'un déphaseur λ/4 (11) est positionné dans le trajet du faisceau d'émission laser (2).

2. Dispositif de radar à laser qui présente un récepteur superhétérodyne optique (6), un laser (1) formé d'un milieu actif (la) et d'un résonateur à deux éléments de sortie (12, 13) au moins et un télescope (10), tel que l'objet (3) est éclairé par un faisceau d'émission laser (2) et que la lumière laser (2c) réfléchie par l'objet est détectée par le récepteur superhétérodyne optique (6), tel que la lumière réfléchie (2c) est déviée sur le récepteur superhétérodyne (6), en passant à travers le résonateur laser (la, 12, 13) et un polariseur (15) interposé en amont du récepteur superhétérodyne (6), caractérisé en ce que le dispositif de radar à laser est réalisé pour détecter des objets immobiles ou en mouvement et pour en mesurer la vitesse, en ce qu'un élément optique (12) est prévu dans le résonateur laser pour définir la direction de la polarisation de la lumière laser, en ce qu'un déphaseur λ/4 (11) est positionné dans le trajet du faisceau d'émission laser (2) et qu'une modulation de fréquence est imprimée au faisceau d'émission laser (2).

3. Dispositif de radar à laser selon les revendications 1 ou 2, caractérisé en ce que le faisceau d'émission laser (2) destiné à déterminer les coordonnées spatiales de l'objet (3) et la lumière laser (2c) réfléchie par l'objet sont acheminés selon un axe colinéaire par un analyseur à balayage (15).

4. Dispositif selon les revendications 1, 2 ou 3, caractérisé en ce qu'un élément de sortie (12) est prévu pour servir de sélecteur qui fait diverger le facteur de réflexion et la transmission en fonction des différentes direction de polarisation du rayonnement laser.

5. Dispositif selon la revendication 4, caractérisé en ce que l'un des éléments de sortie (12,13) est une grille de réflexion disposée selon le principe de Littrow.

6. Dispositif selon la revendication 5, caractérisé en ce que le récepteur superhétérodyne (6) est placé en aval de l'élément de sortie (12) à action sélective suivant la polarisation.

7. Dispositif selon les revendications 1 ou 2, caractérisé en ce que la transmission du résonateur laser est choisie du côté du récepteur superhétérodyne (6) de manière à ce que ledit résonateur puisse fonctionner à la limite du bruit quantique et en dessous du seuil de saturation.

8. Dispositif selon la revendication 2, caractérisé en ce qu'un cristal de Bragg (9) est aménagé dans le trajet du faisceau d'émission laser (2) et imprime un décalage de fréquence à la lumière (2c) renvoyée par l'objet dans le laser.

9. Dispositif selon la revendication 8, caractérisé en ce que la double fréquence de modulation du cristal de Bragg (9) est choisie de manière à qu'elle corresponde à la fréquence propre du résonateur optique, enregistrée sur un mode longitudinal ou transversal d'ordre supérieur.

10. Dispositif selon les revendications 1 ou 2, caractérisé en ce qu'un laser à $CO_2$ sert de source de lumière.

EP 0 392 172 B1

## Fig. 1

## Fig. 2

EP 0 392 172 B1

Fig. 3